Europäisches Patentamt

European Patent Office

Office européen des brevets

(11) Publication number: 0 336 309
A2

# EUROPEAN PATENT APPLICATION

(21) Application number: 89105679.8

(22) Date of filing: 31.03.89

(51) Int. Cl.⁴: G01N 35/02

(30) Priority: 31.03.88 IT 4780888

(43) Date of publication of application:
11.10.89 Bulletin 89/41

(84) Designated Contracting States:
AT BE CH DE ES FR GB GR IT LI LU NL SE

(71) Applicant: POLI-MAK S.p.A.
Via Tiburtina 1262
I-00131 Roma(IT)

(72) Inventor: Welch, Henry Hugh
Via G. Fabbroni, 25
I-00191 Roma(IT)

(74) Representative: Modiano, Guido et al
MODIANO, JOSIF, PISANTY & STAUB
Modiano & Associati Baaderstrasse 3
D-8000 München 5(DE)

(54) A selective or sequential access analyzer for clinico-chemical analyses and for immunological tests.

(57) A selective or sequential access analyzer for clinico-chemical analyses and for immunological tests, which includes a central microprocessor, a dilating device connected to a revolving sampling system or assembly and provided with a sampling probe = a fixed reagent-supporting tray concentrically external with respect to said sampling assembly = a first revolving sample bearing plate in such a position as to be within the reach or of said sampling probe = a second revolving plate, independent of the first one, and concentrically external to the same provided with segments bearing reaction test-tubes and placed in such a way as to be within the reach of said sampling probe = an aspiration system bearing a probe is provided diametrically opposite to said sampling assembly with respect to said two concentric plates = and a reading photometer connected to said aspiration probe through a tube = said analyzer also includes six microprocessors operatively interconnected to each other and to the central microprocessor, respectively, for the diluting device, for the sampling assembly, the first revolving plate, the second revolving plate, the aspiration probe and the reading photometer while the motion of said diluting device, of the sampling assembly, of the first and the second revolving plates, of the aspiration probe and the reading photometer is obtained through stepper motors controlled by the individual microprocessors for each of these elements.

FIG. 1

## A SELECTIVE OR SEQUENTIAL ACCESS ANALYZER FOR CLINICO-CHEMICAL ANALYSES AND FOR IMMUNOLOGICAL TESTS

The present invention relates to a selective or sequential access analyzer for performing clinico-chemical analyses and immunological tests.

More particularly, the present invention relates to an analyzer of the type mentioned above, which is capable of working indifferently in the selective access mode, so as to run the different chemistry tests required for an individual patient, or sequentially, i.e., so as to perform a certain single type of test completely, before starting a different one.

Two different types of analyzers are mainly available on the market and in particular very costly analyzers are available which are intended for large hospitals or sanitary structures, whose performances are complete in order to satisfy most of the requirements = or analyzers at a much lower cost which are thus within the reach of the medium to small clinical laboratory.

That kind of analyzers, which comprises the analyzer according to the present invention, operate in a non-selective mode only, i.e., they perform in succession all analyses of a give type before passing to the next analysis.

This operative mode makes it impossible to run all the different tests required for a particular patient at a time. Or, its operation is not fully automatic.

Moreover, in most cases that type of analyzer can perform a limited number of tests and employs a certain type of dedicated reagents only, operating according to some determined methods.

The applicant, in developing the analyzer suggested according to this patent application, intended to obviate all drawbacks mentioned above suggesting an analyzer which ideally to be used in the small or medium size clinical laboratory, owing to its performance, dimensions and costs which is characterized by a high operative flexibility and versatility so that it can work both in the selective access or in the sequential mode according to the specific requirements of its user and characterized by a performance comparable to that of the large and costly analyzers of the first kind.

The analyzer proposed according to the present invention can furthermore work, independently of the method, with different types of reagents, and also performing tests requirements more than one reagent for each procedure or test method.

It is a further object of the applicant that of providing an analyzer capable of performing up to 64 different analyses, both clinical chemistry and immunology type of test, as well perform up to fifteen different analyses for an individual patient at a time.

## SUMMARY OF THE INVENTION

In accordance with these and other objects, the present invention provides a new and improved clinical analyzer capable of analyzing patient samples in a batch processing or sequential mode, and in an individual or random access mode. In its broadest aspects, the present invention relates to a clinical analyzer for performing clinico-chemical analyses and immunological tests on patient samples, said analyzer including:

A mechanical frame support = a rotatable stage assembly mounted on the support having holders for patient samples and holders for test tubes thereon = a test preparation station disposed adjacent the rotatable stage assembly including a reagent supply and a sample probe assembly for delivering measured portions of at least one reagent and a patient sample to a test tube to form a reaction mixture = and a test preparation station disposed adjacent the rotatable stage assembly including a photometer assembly having a cuvette and an aspirator probe assembly for transferring the reaction mixture from the test tube to the cuvette for photometric measurement, and

the improvement comprising:
said test preparation station and said testing station being located adjacent the rotatable stage assembly on diametrically opposed sides thereof =
said rotatable stage assembly including an inner rotatable sample-bearing plate and a second outer concentric independently rotatable test tube-bearing plate =
a first test tube on said test-tube bearing plate being dedicated as a wash test tube,
means for delivering washing solution to said wash test tube =
programmable driver means for controlling rotation of the sample bearing plate =
programmable driver means for controlling rotation of the test tube-bearing plate = and
central processor control means for coordinating the actions of each said programmable driver means =
whereby independent movements of the sample-bearing plate and said test tube-bearing plate permit testing to be performed sequentially with the same test being performed on a number of patients samples or to permit testing to be performed randomly with a number of different tests being performed per patient sample in any order for at least one patient.

Accordingly it is a specific object of the present invention a selective or sequential access analyzer for clinico-chemical analyses and for immunological tests, comprising a central processor, a diluting device connected to a sampling assembly said device being movable and provided with a sampling probe = a fixed reagent-bearing tray concentrically external with respect to said sampling assembly: a first revolving sample-bearing plate in such a position to be within the reach of the sampling probe = a second revolving plate independent of the first one and concentrically external to the same, provided with segments bearing reaction test-tubes, and in such position as to be within the reach of the sampling probe: an aspiration system bearing probe diametrically opposite to the sampling assembly with respect to said two concentric plates and a reading photometer connected to said aspiration probe through tubing = six microprocessors operatively interconnected to each other and to the central microprocessor are provided in said analyzer, respectively for the diluting device, for the sampling assembly, for the first revolving plate, the second revolving plate, the aspiration probe and the reading photometer, while the motion of said diluting device, of the sampling assembly, of the first and the second revolving plates, of the aspiration probe and of the reading photometer is obtained by means of stepper motors controlled by the single microprocessors of said elements.

According to the present invention, the fixed reagent bearing tray incorporates housing for a number of small bottles that are placed in an inclined position so that all of the reagent or bottle content can be aspirated by the sampling probe.

The revolving plate holding the segments bearing reaction test-tubes will be preferably provided with four segments each one containing 24 test-tubes.

The reading photometer preferably comprises a lamp, two light beam focusing lenses, a revolving filter-bearing drum which is placed between the said two lenses to bring the filter with the required wavelength in correspondence with said light beam, a reading flow-through cuvette which contains the solution to be measured, a photodetector, and additionally a heat sink for cooling said lamp. The whole photometer is temperature controlled.

More particularly, a stepper motor will be provided for obtaining the motion of the syringe of said diluting device as well as two separate stepper motors for rotation of the sampling assembly and for the up and down movement of the sampling probe, two separate stepper motors for independent rotation of said two concentric plates, a stepper motor for the up and down movement of the aspiration probe and a stepper motor for rotation of the filter-bearing drum of the reading photometer.

The diluting device, in which the transmission of the stepper motor motion to the syringe is obtained through a belt between said stepper motor and a worm gear, and a slider which is rigidly connected to a syringe and is slidable on said worm gear and in which a stop position is provided, is conceived to use very simple electronics and in addition it enables the stepper motor to divide the 1 milliliter syringe stroke into 3000 steps thus enabling the aspiration of microquantities in aliquots of 0.33 microliters per step.

A keyboard, a video and printer are connected to the central microprocessor board.

This invention will now be described with reference to the attached drawings showing by way of non-limitative example a preferred embodiment of the invention itself.

## BRIEF DESCRIPTION OF THE DRAWINGS

Figure 1 is a perspective view of the analyzer according to the invention =

Figure 2 is a plan schematic view of the analyzer of Figure 1 with its top panel removed =

Figure 3 is a cross-sectional view along the line III-III of Figure 2 =

Figure 4 is a plan view of a test-tube bearing segment of the analyzer according to the present invention =

Figure 5 is a rear view of the segment shown in Figure 4 =

Figure 6 is a cross-sectional view along the line VI-VI of Figure 4 =

Figure 7 is a cross-sectional view along the line VII-VII of Figure 4 =

Figure 8 is a front view of the aspiration system of the analyzer according to the present invention =

Figure 9 is a front view of the sampling assembly of the analyzer according to the present invention =

Figure 10 is a plan schematic view of the reading photometer =

Figure 11 is a cross-sectional side view of the photometer of Figure 10 = and

Figure 12 is a side view of the diluting device of the analyzer of the present invention.

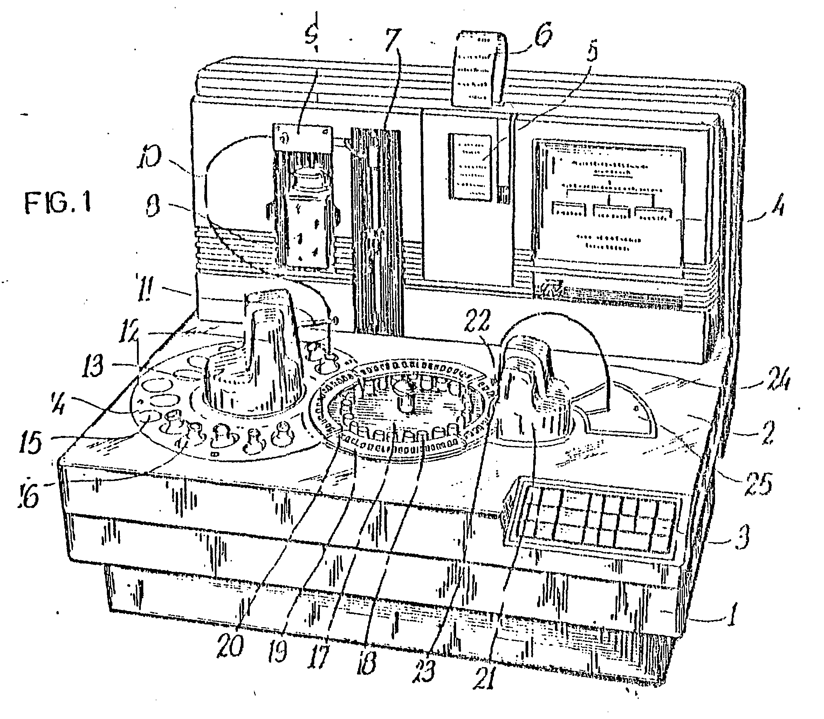

With reference now to Figure 1, the numeral 1 points out the body of the analyzer according to the present invention.

A keyboard for programming all operations of the analyzer is provided on top panel 2 of said body.

The analyzer furthermore includes a video 4 allowing all operations to be visualized and is connected to a printer 5 having a paper wall support 6.

A diluting device 7 is incorporated near the said printer 5, while the bottle 8 containing washing solution as well as a valve 9 of said diluting device 7 are placed near the said device.

The sampling arm 11 provided with the sampling probe 12 is arranged on said top panel 2 and connected to said valve 9 through a sampling tubing 10.

The sampling system 13 supporting the sampling arm 11 is arranged centrally with respect to the circular reagent bearing tray 14 in whose housing 15 are inserted the small bottles 16 containing the reagents.

Again on said top panel 2 and in such a position as to be within the reach of the sampling needle 12, the circular, sample bearing plate 17 is arranged carrying the small sample-bearing cups 18.

Four segments 19, each one carrying twenty-four reaction test-tubes 20 are arranged concentrically with respect to said circular plate 17, in the external position.

The aspiration system 21, provided with the arm 22 and the aspiration probe 23 transfer through the tubing 24 the solutions to be measured in the photometer 25, is placed in the position diametrically opposite to the sampling arm 11 with respect to the center or rotation of the plate 17.

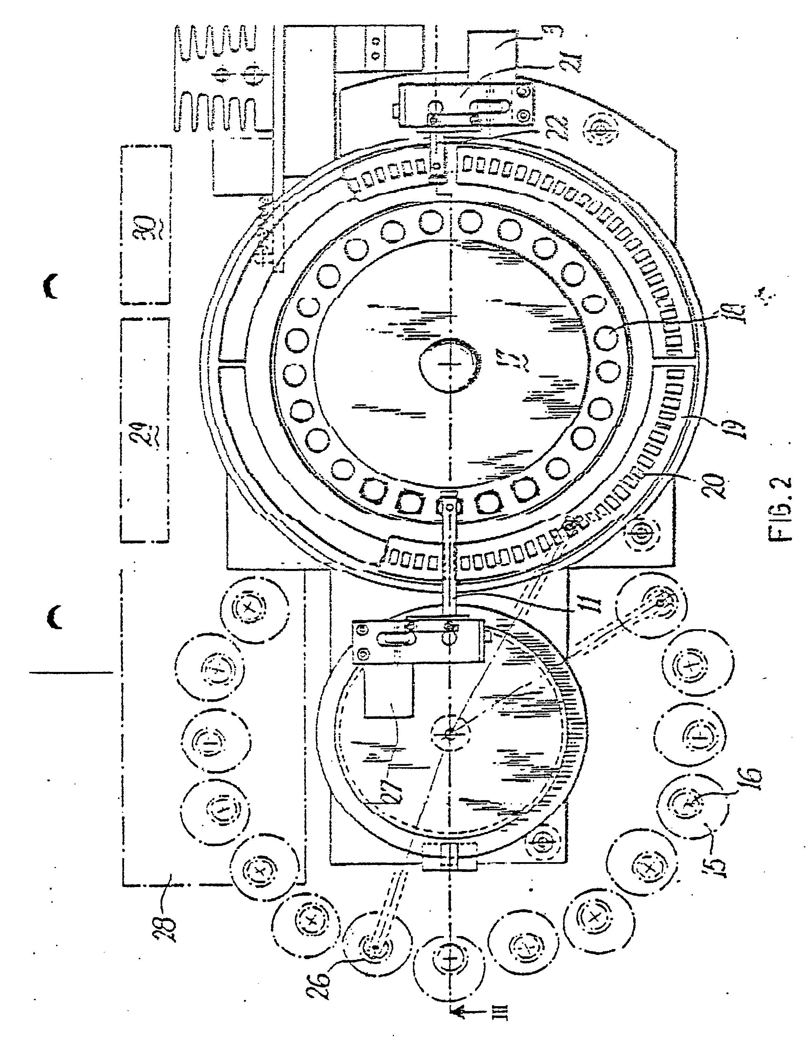

Some details of the analyzer according to the present invention can be singled out in Figure 2.

In particular are shown the starting position 26 of the sampling arm 13 as well as the stepping motor 27 for the up and down movement of probe 12.

Moreover, are shown schematically, the transformer 28, the power supply units 29 and 30 of the analyzer.

The numeral 31 points out the motor driving the aspiration system 21.

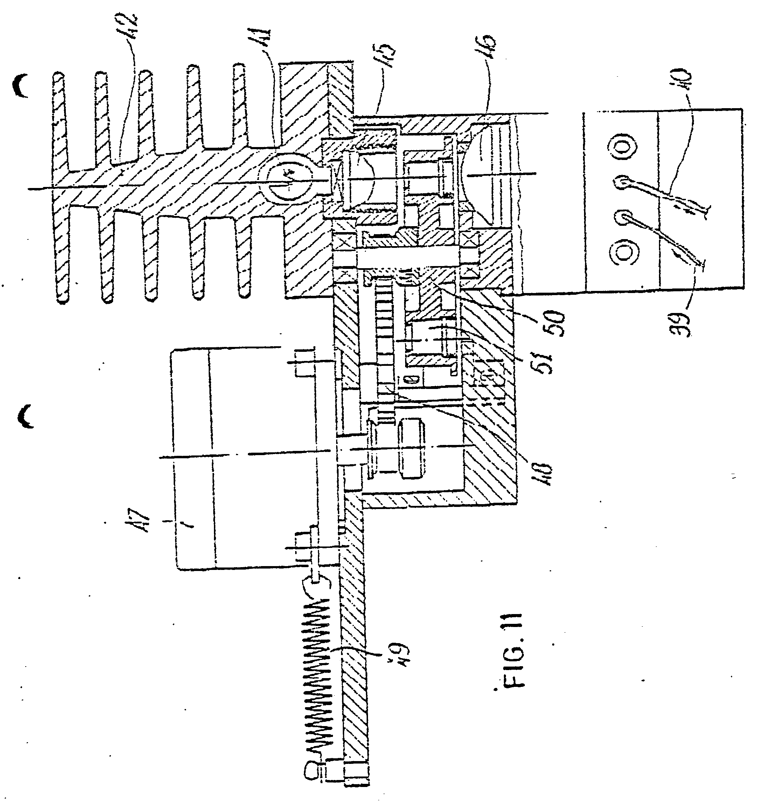

The component parts of the photometer 25 are also shown, which will be disclosed in a more detail in Figures 10 and 11.

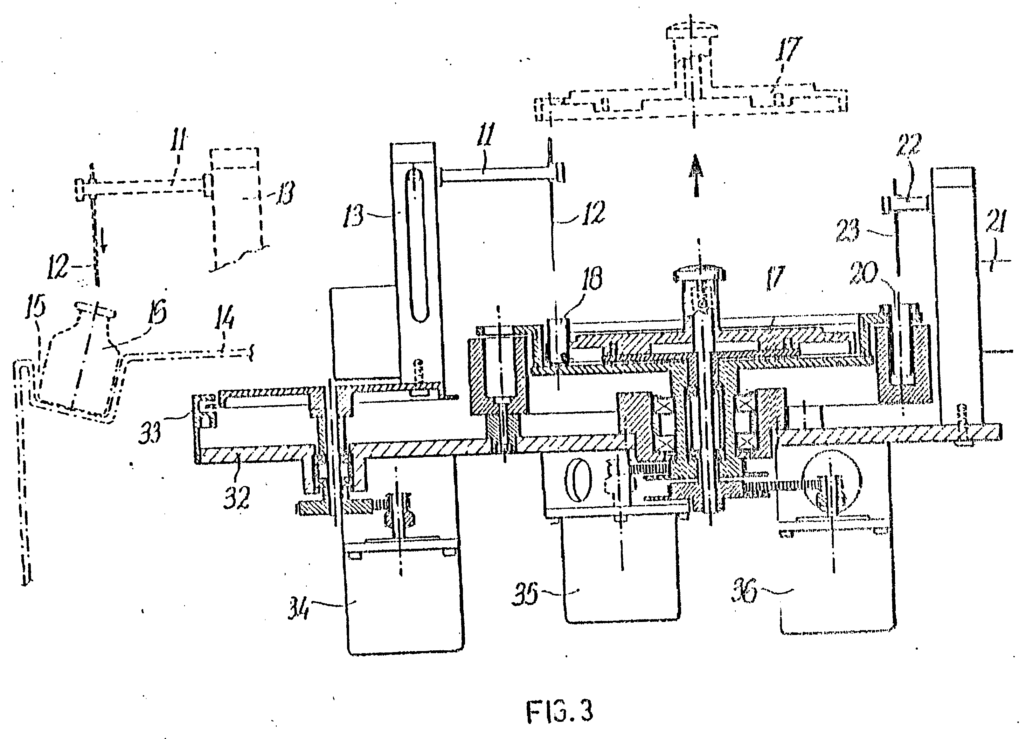

The cross-sectional view shown in Figure 3 illustrates the mechanical means for obtaining the motion of the sampling system 13 as well as of the sample-bearing plate 17 with respect to the mechanical support 32.

In particular, the sampling system 13 is provided with a phototransistor 33 for identifying the position of the same or the starting position 26, and the stepping motor 34 that causes it to rotate through an arc of 360.

The numerals 35 and 36 point out respectively the stepper motors driving the segments 19 and the sample-bearing plate 17.

As can be seen in Figure 3, the housings 15 of the small bottles 16 containing the reagents are realized with a slope so that all of the reagent or bottle content can be withdrawn by the sampling probe 12.

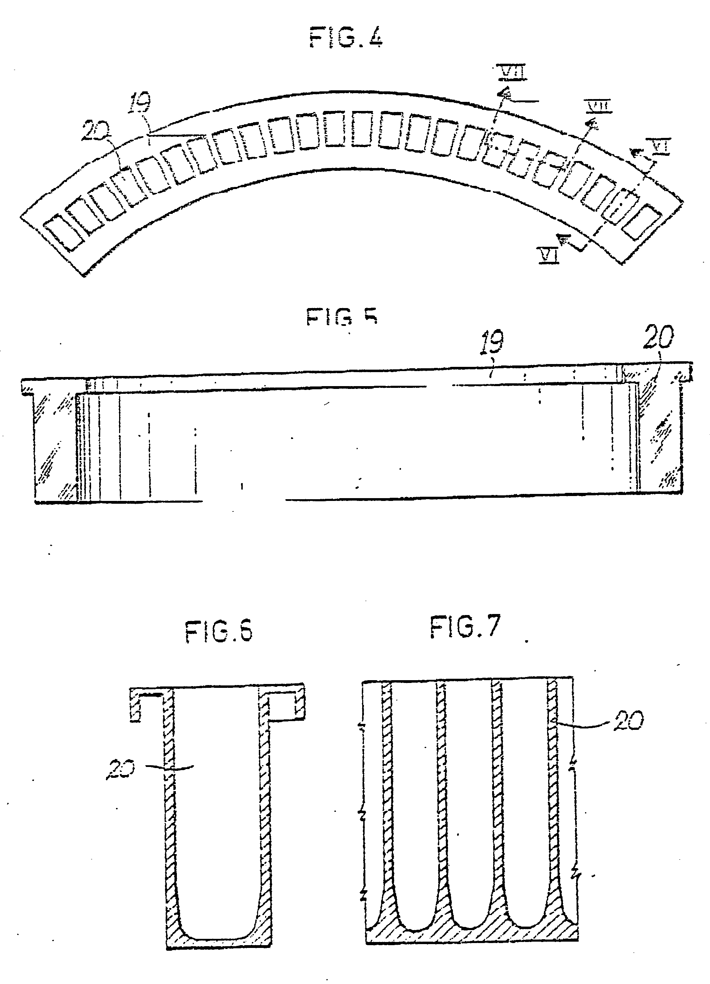

Figures 4-7 show in detail a segment 19 and the reaction test tubes 20 realized in the same.

In all, there ninety-six test-tubes present in the four segments, the first of such test tubes, i.e., the test tube from segment one from which the work starts, will be filled with washing solution to clean the sampling probe, the aspirator probe and the cuvette as needed between an analysis and the next one, and between an operation and the next one.

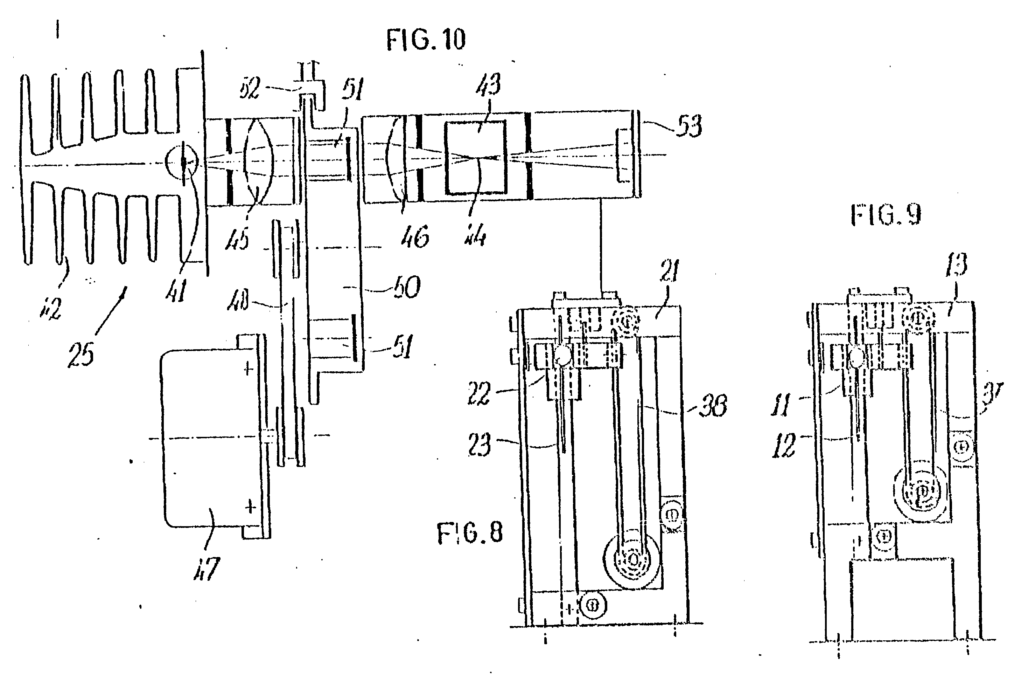

Figures 8 and 9 show respectively the aspiration system 21 and the sampling system 13 in which the driving belts 37, 38 connected mechanically to the stepper motors 36 and 34 are shown.

On the otherhand, Figures 10 and 11 show the photometer 25 for measuring the solutions.

Two tubings 39 and 40, respectively for the inlet and the outlet of the solution to be analyzed lead to the photometer 25. The lamp 41 is incorporated in a cooling heat sink 42. The solution passes the flow-through cuvette 43 and is illuminated by the light beam 44 formed after crossing the two lenses 45 and 46.

A stepper motor 47 controls, through belt 48 and the belt stretcher 49, the drum so carrying the filters 51, each one of them having a different wavelength. Moreover, a phototransistor 52 for identifying the filter 51 placed in the trajectory of the light beam 44 is provided at a point corresponding to said drum 50.

The whole zone relative to said photometer 25 is temperature controlled in order to prevent the results from being altered.

The measurement of the solutions is done by means of a photodiode detector 53 incorporated into the photometer.

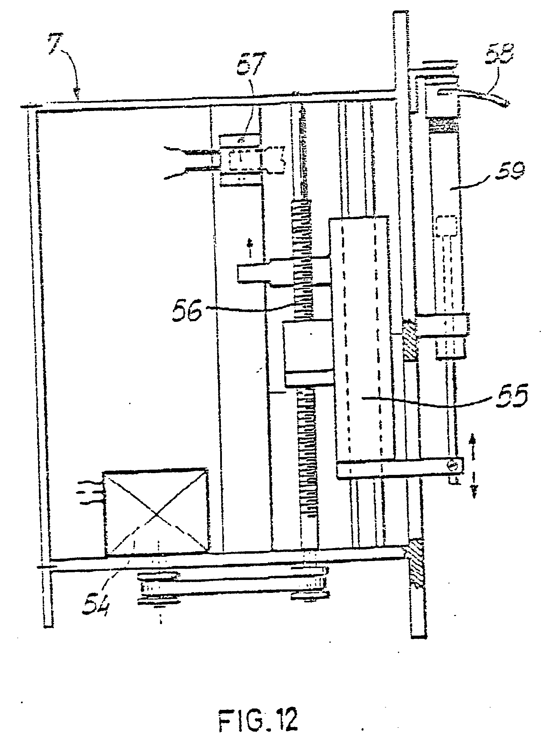

Finally, figure 12 shows the diluting device 7 that is controlled by a stepper motor 61 which enables the stroke of the same to be divided at each step in amounts of 0.33 microliters.

The movement of the element 55 along the worm gear 56 is stopped in the upper part by a photodiode sensor 57. The syringe 59 is connected to the valve 9 through the tubing 58.

The motions of the diluting device 7, of the sampling arm 11, of the plate 17, of the segments 19, of the aspiration arm 22 and of the photometer 25 are controlled by different microprocessors.

As already mentioned above, the analyzer according to the present invention, can work sequentially or in random access mode. In the first case, i.e., in the selective mode, the central microprocessor of the analyzer identifies the first group of chemistry tests programmed, divided according to the type of the test and then it informs through the video 4 that it will perform those tests till reaching a number equal to or less that the number of reaction test-tube 20 available, as said, maximum test-tubes 20 available are ninety-six in number, ans as one of them is reserved for washing operation, the analyzer will select at most ninety-six tests.

Obviously, that number can be slightly lower if some test-tubes 20 are reserved for the reagent blanks or for the other tests.

Once the chemistry tests to be run are selected, the analyzer starts with the first homogeneous batch of tests, for instance the determination of twenty blood sugars.

The syringe 59 of the diluting device 7 fills itself with 1 CC of the wash solution contained in the bottle 8 and transfer such solution through the tubing 10 and the sampling probe 12 into the wash test-tube 20.

The plate holding the four segments 10 consisting of the reaction test-tubes 20 rotates to bring the test-tube containing the wash solution under the aspiration probe 23, which aspirates said solution into the flow-through cuvette inside the photometer 25.

The photometer 25 zeros itself in for each of the nine wavelengths of the filters 51.

The wash solution test-tube 20 is immediately brought back to its original position and it is filled again with fresh wash solution.

The analyzer is now ready to start the first chemistry test. The sampling probe 12 withdraws an exact volume of reagent necessary for that test from bottle 16, then it dips into the wash solution test-tube 20 to clean itself externally.

The sampling probe 12 aspirates the sample from the sample cup 18, and then dips again into the wash solution test-tube 20 for a second external cleansing, and then it deposits both the reagent and the sample into a clean test-tube 20.

Sampling probe 12 having to repeat another test as described above, it dips for the third time into the wash solution to clean itself externally before repeating an operational cycle as described above, depositing the prepared other sample into another clean test tube.

When the determination of all the blood sugar test is done, the analyzer proceeds to determine the next programmed homogeneous batch of tests.

According to the type of test that has been run, the analyzer performs two or more complete washing cycles such as those described in the start of operations, so as to obtain both the internal and the external washing of the probe 12 and of the flow-through cuvette 43 inside photometer 25.

The analyzer proceeds to run the next programmed chemistry test and the operations continue until all the programmed work-load is finished.

The incubation time of the reagent and sample inside the reaction test tubes 20 prior to measurement can be varied from one type of test to another.

When the incubation time is over, each reaction test-tube 20 is brought under the aspiration probe 23 in order to transfer the ready solutions for measurement in the photometer.

The probe 23 enters the reaction test-tubes three times in fast succession at short intervals, so as to create a segmented flow of solution-aim-solution-air-solution-air that cleans well the transport tubing 24 and the flow-through cuvette from one test to another. Thereafter the aspiration probe 23 enters the reaction test tube all the way to the bottom in order to aspirate the total of the remaining solution for measurement in the photometer 25 results are immediately visualized on the video 4 and printed by the printer 5.

The probe 23 repeats again a new cycle as described above, on the next reaction test tube 20.

When the analyzer has finished all the 95 programmed tests, the reaction segments 19 are replaced and the analyzer maybe programmed to execute the next batch of tests.

The analyzer according to the present invention can also execute all the various tests required for an individual patient, for instance in the case of stats.

Obviously the operation cycle is similar to that described above, the only difference being that the analyzer carries out all the various tests needed for the one single patient sequentially and that the analyzer will execute all the necessary washing cycles between a given analysis and the next one.

As already mentioned above in the case of the sequential mode, the analyzer performs the first 95 analyses or a number close to 95, by selecting homogeneous batches of tests independently on the patients for whom they are required, it is a test-oriented way of analysis.

Whereas in the stat mode, it performs all the tests that are required for a single patient only before starting on a new patient.

A third mode of operation of the analyzer according to the present invention is that of selective or random access, which is patient oriented whereby the analyzer selects a limited group of patients taking into consideration all the different tests required for the same and whose total number of tests does not exceed the number of ninety-five.

After having run the tests in that mode when the cycle is finished all the results for each individual patient in that group will be available. The analyzer proceeds running the tests in homogeneous batches of tests following the operational mode of the sequential testing mode.

At the end of each operative cycle, the analyzer does data collation and prints a complete patient report sheet for each patient with the results of tests analyzed.

The present invention has been disclosed just for illustrative but not for limitative purposes according to some preferred embodiments of the same, but it is to be understood that modifications and/or changes can be introduced by those who are skilled in the art without departing from the spirit and scope of the invention defined in the appended claims.

**Claims**

1. A clinical analyzer (1) for opening performing clinico-chemistry analyses and immunological tests on patient samples, said analyzer including:
a mechanical frame support (32) =
a rotatable stage assembly(64) mounted on the support (32) having means for holding patient samples in sample cups (18) and means (19) for holding test tubes (20) thereon =
a test preparation station (62) disposed adjacent the rotatable stage assembly (64) including a reagent supply (16) and a sample probe assembly (13) for delivering measured quantities of at least one reagent and a patient sample to a test tube (20) to form a reaction mixture = and
a testing station (62) adjacent the rotatable stage assembly (64) including a photometer assembly (25) having a cuvette (43) and an aspirator probe assembly (21 for transferring the reaction mixture from the test tube (20) to the cuvette (43) for photometric measurement = and
the improvement comprising:
said test preparation station (60) and said testing station (62) beng located adjacent the rotatable stage assembly (64) on diametrically opposed sides thereof-
said rotatable stage assembly (64) including an inner rotatable sample-bearing plate (17) and a second outer concentric independently-rotatable test tube-bearing plate (66) =
a first test-tube (20) in a test tube holder (19) on said test tube-bearing plate (66) being dedicated as a wash test tube (20) =
means (7) for delivery wash solution to said wash test tube (20) =
programmable driver means (36) for combatting rotation of the sample bearing plate (17) =
programmable drive means (35) for controlling rotation of the test tube-bearing plate (66) and central processor control means (68) for coordinating the actions of each said programmable driver means (35, 36) =

whereby, independent movements of the sample-bearing plate (17) and said test tube-bearing plate (66) into and out of said test preparation station (60) and said testing station (62) permit testing to be performed sequentially with the same test being performed on a number of patient samples and permit testing to be performed randomly with a number of different tests being performed per patient sample in any order for at least one patient sample.

2. A clinical analyzer as in claim 1 wherein each of said programmable drive means (35, 36) comprises a combination of a stepper motor and microprocessor therefor.

3. A clinical analyzer as in claim 1 wherein said test preparation station (60) further includes an annular reagent-bearing tray (14) concentrically external to said sample probe assembly (13) having spaced-apart reagent bottle holders (15) therein for receiving a plurality of open-topped reagent bottles (16) and holding them at a canted outward angle.

4. A clinical analyzer as in claim 1 wherein said sample probe assembly (13) comprises a rotatable base (70) mounted to said frame (32), a vertical arm member (72) extending upwardly from said base (70) to an upper end, a sample arm (11) extending normally from one side of said vertical arm (72) to an opposed free and, said sample arm (11) being mounted for vertical movement along said vertical arm (72), and a sample prove (12) extending toward said base (70) from the free end of the sample arm (11) = programmable drive means (27) for raising and lowering the sample arm (11) along the vertical arm (72) and programmable drive means (34) for rotating the sample probe assembly (13) between a reagent draw position wherein the sample probe (12) is aligned with one of said reagent bottle (16) in said reagent bearing tray (14), a wash position wherein the sample probe (12) is aligned with said wash test tube (20) on said test tube-bearing plate (66), a sample draw position wherein the sample probe (12) is aligned with a patient sample cup (18) positioned on said sample-bearing plate (17) and dispense position wherein the sample probe (12) is aligned with another test tube (20') positioned on said test tube-bearing plate (66).

5. A clinical analyzer as in claim 4 further comprising a diluting assembly (7), said diluting assembly (7) including a syringe (59) with a plunger (80) at one end and connected to a valve means (9) at the opposed inlet/outlet end (82), said valve means (9) being connected by tubing (58) to a supply· of wash solution and being connected by tubing (10) to said sample probe (12) = valve control means for controlling which tubing (58, 10) is in communication with the inlet/outlet opening (82) = and programmable activator means (54, 56) for moving the plunger (80) within the syringe (59) to draw measured amounts of fluid from the wash water supply (8), a reagent bottle (16) or a patient sample (18), respectively, and to dispense same form the sample probe (12) into said wash test tube (20') or another of said test tubes (20).

6. A clinical analyzer as in claim 1 wherein said aspirator probe assembly (21) comprises an aspirator needle (23) mounted for vertical movement at said testing station (62), said aspirator needle (23) positioned to be aligned with a test tube (20) on said test tube-bearing plate (66) in said testing station (62), programmable drive means (31) for raising and lowering the aspirator needle (23) into and out of a test tube (20) positioned in the testing station (62) and aspirator means connected to said needle (23) for aspirating the reaction mixture from the test tube (20) and into the cuvette (43).

7. A clinical analyzer as N claim 4, wherein the programmable drive means (27) for raising and lowering the sample arm (11) comprises a worm gear (56) rotatably mounted to said vertical arm (72), a slider (55) mounted for travel on said worm gear (56) upon rotation thereof, said sample arm (11) being mounted to said slider (55), a stepper motor (27) and microprocessor therefor and a drive belt connecting the stepper motor (27) to said worm gear (56) and said programmable drive means (34) for rotating the sample probe assembly (13) comprises a stepper motor (34) connected to said base (70) and a microprocessor control.

8. A method for chemically analyzing at least one patient sample on automated equipment comprising

(a) providing a moveable sample prove assembly (13) capable of drawing and dispensing measured amounts of fluid through a sample probe (12) =

(b) providing a wash water supply (8), a reagent supply (16), patient sample supply (18) and a supply of test tubes (20) within the reach of said moveable sample probe assembly (13) =

(c) dispensing wash solution through said probe (12) into a wash test tube to rinse the inside of the probe =

(d) removing the wash solution from the wash test tube =

(e) again dispensing wash solution through said probe into the wash test tube =

(f) drawing a measured amount of reagent from said reagent supply into said sample probe =

(g) rinsing said probe by immersing it in said wash test tube =

(h) drawing a measured amount of patient sample into the sample probe =

(i) rinsing said sample probe by immersing it in said wash test tube =

(j) dispensing the measured reagent and sample from the sample probe into another test tube to form a reaction mixture =

(k) rinsing the sample probe by immersing it in said wash test tube =

(l) permitting the reaction mixture to react until the reaction is substantially complete =

(m) subjecting the reaction mixture to photometric analysis to obtain information regarding the chemical composition of the patient sample = and

repeating steps (c)-(m) as necessary until all analyses for that patient same are complete or until the same analysis has been performed on a total number of patient samples.

FIG.1

EP 0 336 309 A2

FIG.2

EP 0 336 309 A2

FIG.3

FIG. 4

FIG 5

FIG.6

FIG.7

FIG.9

FIG.8

FIG.10

FIG. 11

EP 0 336 309 A2

FIG.12